# EUROPEAN PATENT APPLICATION

(11) **EP 4 593 406 A1**
(43) Date of publication of application: **30.07.2025**
(21) Application number: 23880085.8
(22) Date of filing: 04.10.2023
(51) Int. Cl.: H04N 23/62, H04N 5/77, H04N 5/907

(54) **ELECTRONIC DEVICE AND METHOD FOR ACQUIRING IMAGE**

(30) Priority: 21.10.2022 KR 20220136886; 24.11.2022 KR 20220159804
(71) Applicant: Samsung Electronics Co., Ltd., Suwon-si, Gyeonggi-do 16677 (KR)
(72) Inventor: MAENG, Sookyoung, Suwon-si Gyeonggi-do 16677 (KR); KWON, Beomjoon, Suwon-si Gyeonggi-do 16677 (KR); KIM, Donghyun, Suwon-si Gyeonggi-do 16677 (KR)
(74) Representative: Gulde & Partner
(86) International application number: PCT/KR2023/015275
(87) International publication number: WO 2024/085506

(57) **Abstract**

In embodiments, an electronic device may comprise a camera, at least one processor, and a memory having a storage space. The at least one processor may be configured to receive a first user input for capture. The at least one processor may store, on the basis of reception of a second user input for capture, information on the second user input in the storage space while a first capture operation corresponding to the first user input is performed through the camera. The at least one processor may be configured to identify, on the basis of identification of completion of the first capture operation, whether a time difference between the second user input and the completion of the first capture operation has a value equal to or smaller than a threshold value. The at least one processor may be configured to perform a second capture operation corresponding to the second user input if the time difference has a value equal or smaller than the threshold value.

## Description

### [Technical Field]

Various embodiments of the present disclosure relate to an electronic device and a method for obtaining an image.

### [Background Art]

A user may press a shutter button to obtain an image using a camera included in an electronic device. In response to a user input of pressing the shutter button, the electronic device may obtain an image. For example, the electronic device may obtain an image through a capture event and/or a shutter event, after triggering an auto exposure (AE) function, an auto focusing (AF) function, and an auto white balance (AWB) function.

The above-described information may be provided as a related art for the purpose of helping to understand the present disclosure. No claim or determination is raised as to whether any of the above-described information may be applied as a prior art related to the present disclosure.

### [Disclosure]

### [Technical Solution]

According to embodiments, an electronic device is provided. The electronic device may comprise a camera, at least one processor, and memory having a storage space. The at least one processor may be configured to receive a first user input for capturing an image. The at least one processor may, based on receiving a second user input for capturing an image while a first capturing operation corresponding to the first user input is performed through the camera, store information regarding the second user input in the storage space. The at least one processor may be configured to, based on identifying completion of the first capturing operation, identify whether a time difference between the second user input and the completion of the first capturing operation is less than or equal to a threshold. The at least one processor may be configured to, if the time difference is less than or equal to the threshold, perform a second capturing operation corresponding to the second user input.

According to embodiments, a method performed by an electronic device is provided. The method may comprise receiving a first user input for capturing. The method may comprise, based on receiving a second user input for capturing an image while a first capturing operation corresponding to the first user input is performed, storing information regarding the second user input in a storage space. The operation may comprise, based on identifying completion of the first capturing operation, identifying whether a time difference between the second user input and the completion of the first capturing operation is less than or equal to a threshold. The operation may comprise, if the time difference is less than or equal to the threshold, performing a second capturing operation corresponding to the second user input.

According to embodiments, a non-transitory computer-readable medium is provided. The non-transitory computer-readable medium may comprise memory configured to store instructions. The instructions, when executed by a processor, may cause the electronic device to receive a first user input for capturing, based on receiving a second user input for capturing an image while a first capturing operation corresponding to the first user input is performed, to store information regarding the second user input in a storage space, based on identifying completion of the first capturing operation, to identify whether a time difference between the second user input and the completion of the first capturing operation is less than or equal to a threshold, and if the time difference is less than or equal to the threshold, to perform a second capturing operation corresponding to the second user input.

### [Description of the Drawings]

FIG. 1 is a block diagram of an electronic device in a network environment according to various embodiments.
FIG. 2A is a block diagram exemplifying a camera module, according to embodiments.
FIG. 2B illustrates an example of a functional configuration of an electronic device, according to an embodiment.
FIG. 3 illustrates an example of a capture procedure, according to an embodiment.
FIGS. 4A to 4B illustrate an example of capturing operations corresponding to subsequent user inputs, according to an embodiment.
FIG. 5 illustrates an example of capturing operations according to a post processing picture (PPP) method, according to an embodiment.
FIG. 6 illustrates an operation flow of an electronic device for capturing operations corresponding to subsequent user inputs, according to an embodiment.
FIG. 7 illustrates an operation flow of an electronic device for storing a user input for capturing, according to an embodiment.
FIG. 8 illustrates an operation flow of an electronic device after completion of a capturing operation, according to an embodiment.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

A term referring to a storage unit (e.g., a storage space, memory, a buffer, a queue, a list, or a container), a term referring to a user input (e.g., a shutter, a button input, a press input, a capture event, or a shutter event), a term referring to an internal system operation (e.g., a trigger, a procedure, an event, or an operation), or a term referring to a component of a device, and the like that used in the following description are exemplified for convenience of explanation. Therefore, the present disclosure is not limited to terms to be described below, and another term having an equivalent technical meaning may be used. In addition, a term such as '...unit, '...device, '...object', and '...structure', and the like used below may mean at least one shape structure or may mean a unit processing a function.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' refer to including at least one of 'C' or 'D', that is, {'C', 'D', and 'C' and 'D'}.

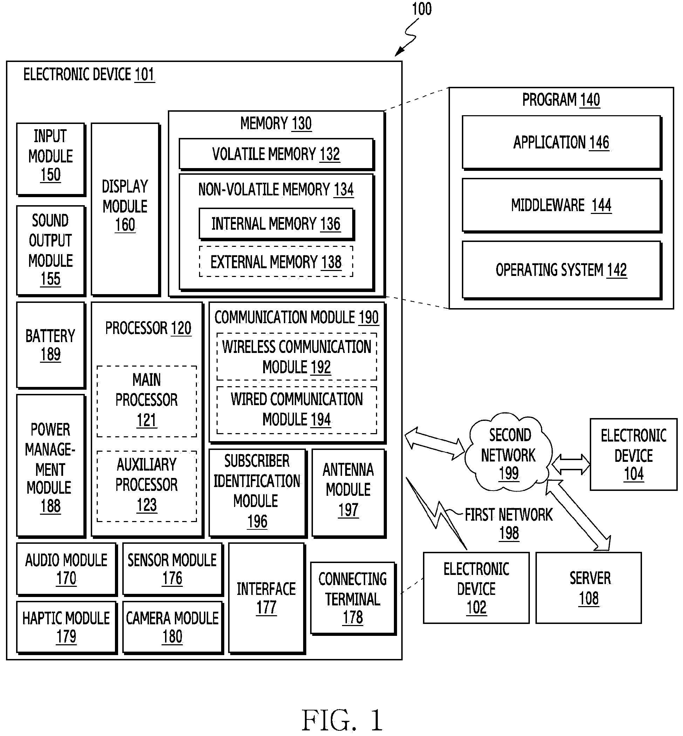

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

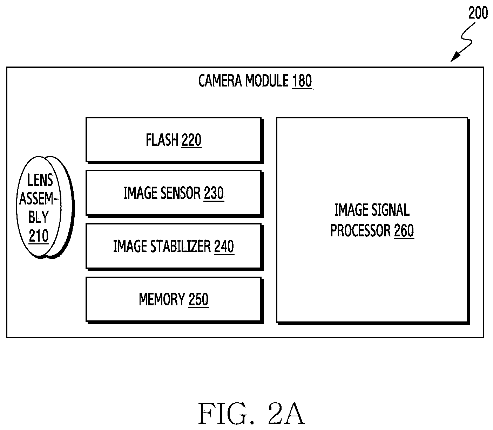

FIG. 2A is a block diagram 200 exemplifying a camera module 180, according to embodiments.

Referring to FIG. 2A, the camera module 180 may include a lens assembly 210, a flash 220, an image sensor 230, an image stabilizer 240, memory 250 (e.g., buffer memory), or an image signal processor 260. The lens assembly 210 may collect light emitted from a subject which is a target of an image shoot. The lens assembly 210 may include one or more lenses. According to an embodiment, the camera module 180 may include a plurality of lens assemblies 210. In this case, the camera module 180 may form, for example, a dual camera, a 360-degree camera, or a spherical camera. A portion of the plurality of lens assemblies 210 may have the same lens property (e.g., a field of view, a focal length, autofocus, a f number, or an optical zoom), or at least one lens assembly may have one or more lens properties different from those of another lens assembly. The lens assembly 210 may include, for example, a wide-angle lens or a telephoto lens.

The flash 220 may emit light used to enhance light emitted or reflected from a subject. According to an embodiment, the flash 220 may include one or more light emitting diodes (e.g., a red-green-blue (RGB) LED, a white LED, an infrared LED, or an ultraviolet LED), or a xenon lamp. The image sensor 230 may obtain an image corresponding to the subject by converting the light emitted or reflected from the subject and transmitted through the lens assembly 210 into an electrical signal. According to an embodiment, the image sensor 230 may include, for example, one image sensor selected from among image sensors having different properties, such as an RGB sensor, a black and white (BW) sensor, an IR sensor, or a UV sensor, a plurality of image sensors having the same property, or a plurality of image sensors having a different property. Each image sensor included in the image sensor 230 may be implemented using, for example, a charged coupled device (CCD) sensor or a complementary metal oxide semiconductor (CMOS) sensor.

The image stabilizer 240 may move at least one lens included in the lens assembly 210 or the image sensor 230 in a specific direction or control (e.g., adjusting read-out timing, and the like) an operating characteristic of the image sensor 230, in response to a movement of the camera module 180 or an electronic device 101 including the camera module 180. This enables compensation for at least a portion of a negative effect caused by the movement on the shot image. According to an embodiment, the image stabilizer 240 may detect such a movement of the camera module 180 or the electronic device 101 using a gyro sensor (not illustrated) or an acceleration sensor (not illustrated) disposed inside or outside the camera module 180. According to an embodiment, the image stabilizer 240 may be implemented as, for example, an optical image stabilizer.

The memory 250 may at least temporarily store at least a portion of the image obtained through the image sensor 230 for a next image processing task. For example, in case that obtaining of an image by a shutter is delayed or a plurality of images are obtained at high speed, the obtained original image (e.g., a Bayer-patterned image or a high-resolution image) may be stored in the memory 250, and a corresponding copy image (e.g., a low-resolution image) may be previewed through a display device (e.g., the display module 160 of FIG. 1). Thereafter, in case that a specified condition is satisfied (e.g., the user input or a system command), at least a portion of the original image that was stored in the memory 250 may be, for example, obtained and processed by an image signal processor 260. According to an embodiment, the memory 250 may be configured as at least a portion of memory 130 or as separate memory operated independently of the memory 130.

The image signal processor 260 may perform one or more image processes regarding an image obtained through the image sensor 230 or an image stored in the memory 250. The one or more image processes may include, for example, a depth map generation, three-dimensional modeling, a panorama generation, feature point extraction, image synthesis, or image compensation (e.g., noise reduction, resolution adjustment, brightness adjustment, blurring, sharpening, or softening). Additionally or alternatively, the image signal processor 260 may perform control (e.g., exposure time control, or read-out timing control, and the like) of at least one (e.g., the image sensor 230) of components included in the camera module 180. The image processed by the image signal processor 260 may be stored in the memory 250 again for additional processing or provided to an external component (e.g., the memory 130, a display module 160, an electronic device 102, an electronic device 104, or a server 108) of the camera module 180. According to an embodiment, the image signal processor 260 may be configured as at least a portion of a processor 120 or may be configured as a separate processor operated independently of the processor 120. In case that the image signal processor 260 is configured as a processor separate from the processor 120, at least one image processed by the image signal processor 260 may be displayed through the display module 160 either as is or after additional image processing by the processor 120.

According to an embodiment, the electronic device 101 may include a plurality of camera modules 180 each having different properties or different functions. In this case, for example, at least one of the plurality of camera modules 180 may be a wide camera, and at least another one may be a telephoto camera. Similarly, at least one of the plurality of camera modules 180 may be a front camera, and at least another one may be a rear camera.

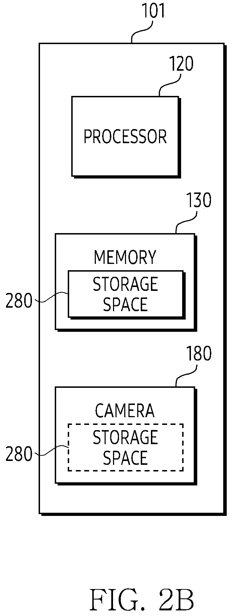

FIG. 2B illustrates an example of a functional configuration of an electronic device, according to embodiments.

Referring to FIG. 2B, an electronic device (e.g., the electronic device 101 of FIG. 1) may include a processor, a camera (e.g., the camera module 180), and memory (e.g., the memory 130 or the memory 250).

The electronic device 101 may include a processor 120. The processor 120 may be implemented with one or more integrated circuit (IC) chips and may execute various data processes. For example, the processor 120 may be implemented as a system on chip (SoC). For example, the processor 120 may include sub-components including a central processing unit (CPU), a graphics processing unit (GPU), a neural processing unit (NPU), an image signal processor (ISP), a display controller, a memory controller, a storage controller, an application processor (AP), a communication processor (CP), and/or a sensor interface. The sub-components are merely exemplary. For example, the processor 120 may further include other sub-components. For example, some sub-components may be omitted from the processor 120. According to an embodiment, the electronic device 101 may transmit a capture event to a system for controlling the camera 180, or trigger an auto exposition (AE) function, an auto focusing (AF) function, and/or an auto white balance (AWB) function to obtain an image through the camera 180. According to an embodiment, the electronic device 101 may store a user input for image capture in the memory 130.

The electronic device 130 may include the memory 130. The memory 130 may store data such as a basic program, an application program, or setting information for an operation of the electronic device 101. The memory 130 may be referred to as a storage unit. The memory 130 may be implemented as a volatile memory (e.g., a volatile memory 132), a non-volatile memory (e.g., a nonvolatile memory 134) or a combination of the volatile memory and the non-volatile memory. In addition, the memory 130 may provide stored data in accordance with a request of the processor 120. According to an embodiment, the memory 130 may include a storage space 280 for storing the user input for capturing. For example, the storage space 280 may be referred to as a shutter queue, a shutter list, or a shutter array. According to an embodiment, the memory 130 may store images captured by at least one camera (e.g., the camera 180) for processing by the processor 120. Although the storage space 280 is illustrated in the separate memory 130 in FIG. 2B, embodiments of the present disclosure are not limited thereto. For example, the storage space for storing the user input for capturing may be stored in a storage space (e.g., the memory 250) inside the camera 180. That is, the illustration of FIG. 2B is not construed as limiting other embodiments of the present disclosure.

The electronic device 101 may include the camera 180. For example, the cameras may include at least one of a wide camera, an ultra-wide camera, a first telephoto camera, or a second telephoto camera. The wide camera may be used to obtain an image of an object positioned at a certain distance (e.g., approximately 28 centimeters (cm)) or more from the electronic device 101 at a low magnification (e.g., less than approximately 3-magnification). The ultra-wide camera may be used to obtain an image of an object positioned less than the certain distance from the electronic device 101 at the low magnification. The first telephoto camera may be used to obtain an image of an object in a first magnification range (e.g., greater than or equal to 3-magnification and less than 10-magnification). The second telephoto camera may be used to obtain an image of an object in a second magnification range (e.g., greater than or equal to 10-magnification and less than 15-magnification). According to an embodiment, the electronic device 101 may obtain an image through the camera 180.

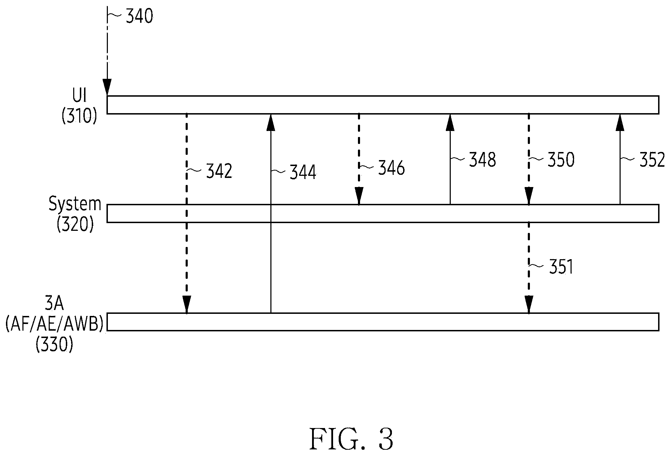

In an embodiment, in case that a user presses a shutter of the electronic device (e.g., the electronic device 101), the electronic device 101 may obtain an image. For example, as soon as the user presses the shutter, as the electronic device 101 initiates capture, the electronic device 101 may obtain a desired scene at a desired timing. Until a first capturing operation is completed, the electronic device 101 cannot initiate a next capturing operation. Therefore, a shutter input received by the electronic device 101 during the capturing operation is ignored, the user may press the shutter of the electronic device 101 again for capturing. Since next capture is possible only when the user presses the shutter of the electronic device 101 again after the capturing operation is completed, the user may feel that perceived speed of shot-to-shot is slow. In addition, the user may have difficulty obtaining the image at the desired timing. According to embodiments of the present disclosure, the electronic device 101 may perform subsequent capture as soon as the user presses the shutter input, allowing the user to obtain the desired scene at the desired timing without missing it. In addition, the user may feel that the perceived speed of the shot-to-shot is improved. Hereinafter, in order to describe subsequent capturing operations of the electronic device 101, detailed operations of the capturing operation are described through FIG. 3.

FIG. 3 illustrates an example of a capture procedure, according to an embodiment. A capturing operation may be performed by a processor (e.g., a processor 120) and a camera (e.g., a camera module 180) of an electronic device (e.g., an electronic device 101).

Referring to FIG. 3, the electronic device 101 may receive a user input 340 for image capture. The user input 340 may include an input related to an object (hereinafter, a shutter button) for image capture. For example, the electronic device 101 may receive the user input 340 touching the object (hereinafter, the shutter button) for image capture on a user interface (UI) 310 displayed through a display (e.g., a display module 160) of the electronic device 101. For example, the UI 310 is a UI for the camera 180 and may correspond to an application layer. The electronic device 101 may receive the user input 340 touching the shutter button displayed on the UI 310. On the other hand, for another example, unlike FIG. 3, the electronic device 101 may receive a control signal received from an external electronic device (e.g., a stylus pen). The control signal may include a control command for image capture.

In an operation 342, the electronic device 101 may request a 3A interface 330 to trigger an AE function or an AF function. For example, the 3A interface 330 may provide activation of auto focusing (AF), activation of auto exposure (AE), and activation of auto white balance (AWB). The electronic device 101 may change a trigger state for each function. The electronic device 101 may change an AF trigger state. For example, in an initial state in which the AF state is not focused, in a state in which a continuous auto focus (CAF) is being scanned to focus, or in a state in which the lens movement is required to focus with the CAF, the electronic device 101 may trigger the AF function. The electronic device 101 may change an AE trigger state. For example, the electronic device 101 may trigger the AE function in order to use a flash. The electronic device 101 may change an auto white balance (AWB) trigger state.

In an operation 344, the electronic device 101 may identify that change in the AE trigger state and the AF trigger state is completed. For example, in case that focus is achieved, the lens is fixed, and an appropriate exposure value is identified, the application layer of the electronic device 101 may obtain an AE, AF trigger completion event from the 3A interface 330.

In an operation 346, the electronic device 101 may transmit a capture event to a camera system 320. For example, the camera system 320 may mean an interface for controlling the camera 180. In response to a user input in the UI 310, a request to obtain image may be provided to the camera 180 through the camera system 320. In an operation 348, the electronic device 101 may obtain a shutter event corresponding to the capture event from the camera system 320. In the UI 310 of the electronic device 101, as the shutter event is received, an effect sound (e.g., shutter sound) or vibration (e.g., shutter vibration) corresponding to the shutter event may be outputted.

In an operation 350, the electronic device 101 waits until capture is completed, and may request the camera system 320 to complete the capture. In an operation 351, the electronic device 101 may transmit a command for requesting AF lock cancellation to the 3A interface 330 for next capture. In an operation 352, the electronic device 101 may receive a captured image from the camera system 320. For example, the captured image may mean an image whose processing has been completed after being captured by the camera system 320. When the captured image is obtained from the application layer of the electronic device 101, the electronic device 101 may identify that a capturing operation corresponding to the user input 340 is completed.

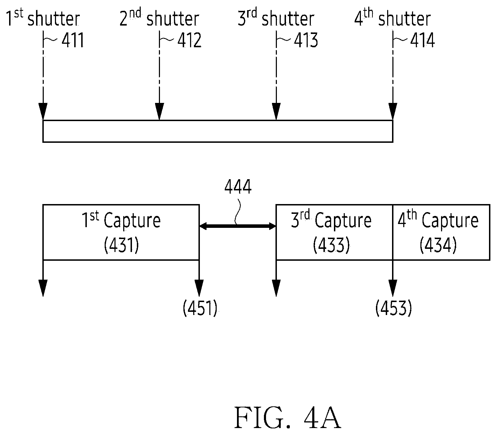

According to an embodiment, a capturing operation corresponding to the user input 340 may include the operation 342 to the operation 352. In case that an additional capture request of a user, for example a shutter input, received during a series of operations corresponding to the operation 342 to the operation 352 are in process, is ignored, the user may have difficulty obtaining a desired image at a desired timing. Therefore, according to embodiments, the electronic device 101 may store the shutter input in a separate storage space (e.g., the storage space 280), instead of ignoring the shutter input. For example, the storage space may be referred to as a shutter queue. According to an embodiment, the electronic device 101 may store the shutter input in the shutter queue until an existing capturing operation is completed. In case that the user subsequently provides shutter inputs, the electronic device 101 may store the shutter input in an interval (hereinafter, a capturing interval) in which a capturing operation is performed. For example, in case that a next shutter input is received in a completion time point of the capturing operation after initiation of capture, the electronic device 101 may store the shutter input in the shutter queue. In an embodiment, after the capturing operation is completed, the electronic device 101 may check whether the shutter input stored in the shutter queue is valid, and then immediately initiate a capturing operation corresponding to the shutter input in case that the shutter input is valid. Hereinafter, an example of a subsequent capturing operation using the shutter queue is described through FIGS. 4A to 4B.

FIGS. 4A to 4B illustrate an example of capturing operations corresponding to subsequent user inputs, according to an embodiment.

Referring to FIG. 4A, a user may provide four user inputs to an electronic device 101. Each user input may be an input for capturing. The user inputs may include, for example, a first shutter input 411, a second shutter input 412, a third shutter input 413, and a fourth shutter input 414. The electronic device 101 may sequentially receive the first shutter input 411, the second shutter input 412, the third shutter input 413, and the fourth shutter input 414.

The electronic device 101 may receive the first shutter input 411. The electronic device 101 may perform a first capturing operation 431 corresponding to the first shutter input 411 based on receiving the first shutter input 411. For example, a series of operations for the first capturing operation 431 may include the operation 342 to the operation 352 of FIG. 3. While the first capturing operation 431 is in progress, the electronic device 101 may receive the second shutter input 412. A reception time point of the second shutter input 412 may precede a completion time point 451 of the first capturing operation 431. If the electronic device 101 ignores the second shutter input 412, the electronic device 101 may not perform a second capturing operation corresponding to the second shutter input 412. After completion of the first capturing operation 431, the electronic device 101 may receive the third shutter input 413. The electronic device 101 may perform a third capturing operation 433 corresponding to the third shutter input 413, based on receiving the third shutter input 413. Since a capturing operation is not in progress, the third capturing operation 433 may be initiated as soon as the third shutter input 413 is received. After completion of the third capturing operation 433, the electronic device 101 may receive the fourth shutter input 414. The electronic device 101 may perform a fourth capturing operation 434 corresponding to the fourth shutter input 414, based on receiving the fourth shutter input 414. Since the fourth shutter input 414 is received after a completion time point 453 of the third capturing operation 433, the fourth capturing operation 434 may be initiated as soon as the fourth shutter input 414 is received.

Despite four user inputs, since a total of three capturing operations are performed, the electronic device 101 may obtain three images. A gap 444 may exist between the completion time point 451 of the first capturing operation 433 and a start time point of the third shutter input 413. The user may feel a timing mismatch between subsequently obtained images due to the gap 444. In addition, since an image corresponding to the second capturing operation is not obtained, the user may feel that the shot-to-shot speed is slow.

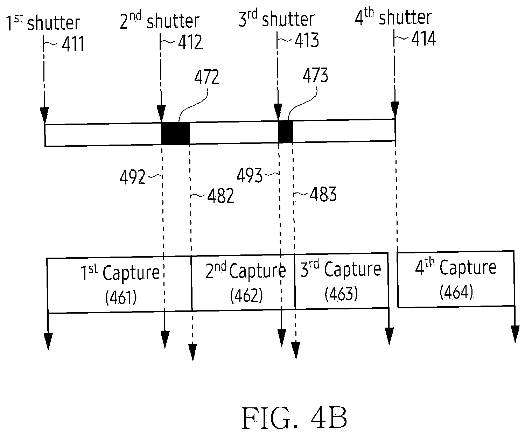

Referring to FIG. 4B, according to an embodiment, the electronic device 101 may store a user input for capturing in an internal storage space (e.g., the storage space 280) of the electronic device 101. For example, the internal storage space may include a shutter queue. The same reference number may be used for the same description.

The electronic device 101 may sequentially receive the first shutter input 411, the second shutter input 412, the third shutter input 413, and the fourth shutter input 414. The electronic device 101 may perform a first capturing operation 461 corresponding to the first shutter input 411, based on receiving the first shutter input 411. For example, a series of operations for the first capturing operation 461 may include the operation 342 to the operation 352 of FIG. 3.

While the first capturing operation 461 is in progress, the second user input 412 may be received. According to an embodiment, the electronic device 101 may store the second user input 412 in the shutter queue. Thereafter, the electronic device 101 may identify completion of the first capturing operation 461. According to an embodiment, the electronic device 101 may identify whether there is a user input stored in the shutter queue based on identifying the completion of the first capturing operation 461. In case that there is a user input stored in the shutter queue, the electronic device 101 may identify whether the user input, for example, the second user input 412, is valid. In order to identify whether the second user input 412 is valid, the electronic device 101 may obtain a time difference 472 between a time point 482 at which the first capturing operation 461 is completed and a time point 492 at which the second user input 412 is received. In case that the time difference 472 is within a threshold (e.g., approximately 100 milliseconds (ms)), the electronic device 101 may initiate a second capturing operation 462 corresponding to the second user input 412 as soon as the first capturing operation 461 is completed. In addition, the electronic device 101 may remove the second user input 412 stored in the shutter queue. In an embodiment, although not disclosed in FIG. 4B, the electronic device 101 may ignore the second user input 412 in case that the time difference 472 is greater than or equal to the threshold. For example, the electronic device 101 may remove the second user input 412 stored in the shutter queue without performing the second capturing operation 462.

In an embodiment, while the second capturing operation 462 is in progress, the third user input 413 may be received. According to an embodiment, the electronic device 101 may store the third user input 413 in the shutter queue.

In an embodiment, the electronic device 101 may obtain a time difference 473 between a time point 483 at which the second capturing operation 462 is completed and a time point 493 at which the third user input 413 is received. For example, in case that the time difference 473 is within a threshold, the electronic device 101 may initiate a third capturing operation 463 corresponding to the third user input 413 as soon as the second capturing operation 462 is completed. For example, the electronic device 101 may remove the third user input 413 stored in the shutter queue. Thereafter, the electronic device 101 may perform a fourth capturing operation 464 corresponding to the fourth shutter input 414 based on receiving the fourth shutter input 414. Since the fourth shutter input 414 is received after completion of the third capturing operation 463, the fourth capturing operation 464 may be initiated as soon as the fourth shutter input 414 is received.

In an embodiment, whenever a capturing operation is completed, the electronic device 101 may check whether a user input is stored in the shutter queue. Since four capturing operations corresponding to four user inputs are performed through the shutter queue, the electronic device 101 may obtain four images. Since there is no separate gap between capturing operations, the user may feel an improvement in shot-to-shot speed. For example, since the capturing operation is performed, in response to the shutter input, in a situation where obtaining of subsequent images is required (e.g., capturing a sports scene or capturing a moving subject), the user may obtain a desired image without perceived delay. For example, since RAW capture or capture that requires a high level of image processing, such as high-resolution capture (e.g., 200 million pixels), has a large image size, an interval of the capturing operation may be lengthened. At this time, an additional capture may be performed immediately through a subsequent shutter input of the present disclosure.

According to an embodiment, whenever the capturing operation is completed, the electronic device 101 may identify whether the user input stored in the shutter queue is valid. In case that there is greater than or equal to a threshold (e.g., 100 ms) left from a time point of the user input, for example, the shutter input, to a capture completion time point, the capturing operation may be excessively stretched by an indiscriminately stored shutter input. The electronic device 101 may increase perceived performance and increase efficiency of the capturing operation by setting a threshold range, which is a time before the completion time point.

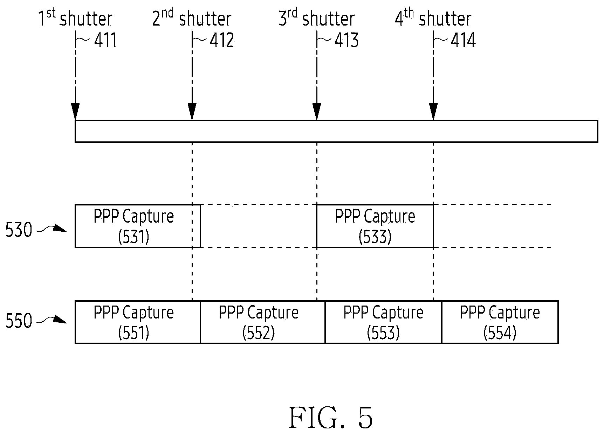

FIG. 5 illustrates an example of capturing operations according to a post processing picture (PPP) method, according to an embodiment. The PPP method is a method that allows a next capturing operation while processing an image in background, once a collection of frames is completed in a hardware interface (e.g., a hardware abstraction layer (HAL)). After the image is obtained by an image sensor (e.g., an image sensor 230) through the PPP method, an image processor (e.g., an image processor 260) may perform following image processing (e.g., multiframe image synthesis, noise reduction, or bokeh image generation).

Referring to FIG. 5, a user may provide more than four user inputs to an electronic device 101. Each user input may be an input for capturing. The user inputs may include a first shutter input 411, a second shutter input 412, a third shutter input 413, and a fourth shutter input 414. The electronic device 101 may sequentially receive the first shutter input 411, the second shutter input 412, the third shutter input 413, and the fourth shutter input 414. The same reference number may be used for the same description.

When a subsequent PPP capturing operation 530 is performed without a shutter queue, since it takes time to receive an image from a hardware interface, capture completion may be delayed. Since the capture completion is delayed, a situation in which a shutter input is ignored may occur. For example, capture may not be performed as much as a user subsequent inputs the shutter. For example, despite four user inputs, the electronic device 101 may perform a first PPP capturing operation 531 corresponding to the first user input 411, and a third PPP capturing operation 533 corresponding to the third user input 413. The electronic device 101 may obtain two images. A capturing operation corresponding to the second user input 412 and a capturing operation corresponding to the fourth user input 414 do not occur.

A subsequent capturing operation using a shutter queue according to embodiments of the present disclosure may also be applied to the PPP method. The electronic device 101 may perform a subsequent PPP capturing operation 550 using the shutter queue. A shutter event inputted by the user through the shutter queue may be processed after a previous capturing operation is completed. Since the second user input 412 or the fourth user input 413 is stored in the shutter queue, the electronic device 101 may perform a PPP capturing operation corresponding to each user input without omission. Since subsequent capture is possible through the shutter queue, the electronic device 101 may perform all of the first PPP capturing operation 551 corresponding to the first user input 411, a second PPP capturing operation 552 corresponding to the second user input 412, a third PPP capturing operation 553 corresponding to the third user input 413, and a fourth PPP capturing operation 554 corresponding to the fourth user input 414.

After the first PPP capturing operation 551 is completed, the electronic device 101 may perform subsequent image processing on the image obtained through the first PPP capturing operation 551 in background. In an embodiment, in case that the second shutter input 412 is received during the first PPP capturing operation 551, the electronic device 101 may store the second shutter input 412 in the shutter queue, and the second PPP capturing operation 552 may be initiated by the second shutter input 412 stored in the shutter queue without waiting for a new shutter input. Since subsequent image processing is performed on the image obtained through the first PPP capturing operation 551 while the electronic device 101 performs the second PPP capturing operation 552, a time taken to obtain the processed image after the first PPP capturing operation 551 may reduce.

After the PPP capturing operation is completed, in case that a time gap until a next PPP capturing operation is performed is reduced, a time gap between subsequent image processings in the background may reduce. For example, in a subsequent PPP capturing operation 530 without the shutter queue, after subsequent image processing for the first PPP capturing operation 531, the electronic device 101 may perform subsequent image processing for the third PPP capturing operation 533. Next subsequent image processing may be performed after the third PPP capturing operation 533 in accordance with the third shutter input 413. Therefore, after the subsequent image processing for the first PPP capturing operation 531, a time during which subsequent image processing is not performed may occur. However, in the subsequent PPP capturing operation 550 using the shutter queue, the electronic device 101 may perform subsequent processing for the second PPP capturing operation 552 after subsequent processing for the first PPP capturing operation 551. The second PPP capturing operation 552 may be performed in response to the first PPP capturing operation 551 being completed. Therefore, a time during which subsequent image processing is not performed may be relatively reduced compared to the subsequent PPP capturing operation 530 without the shutter queue.

While processing subsequent image processing in the background in the PPP method, since the next capturing operation is possible, a time required for subsequent capturing operations using the PPP method may be reduced. In addition, a gap between image capturing operations may be reduced by using the shutter queue in conjunction with the PPP method, enabling faster subsequent capture.

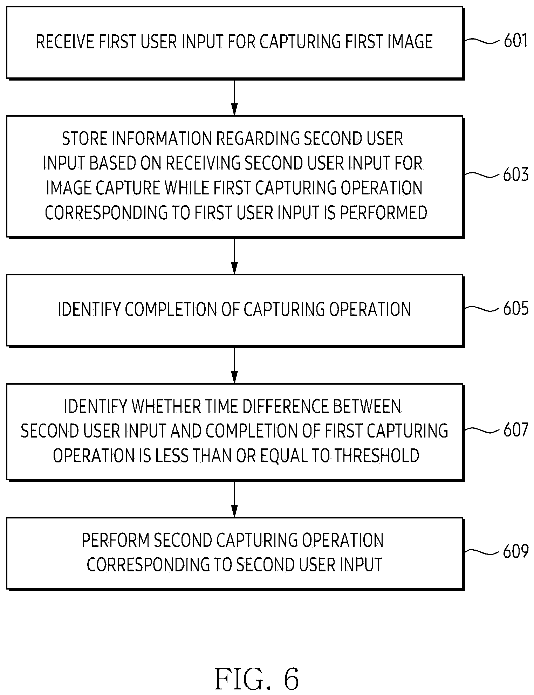

FIG. 6 illustrates an operation flow of an electronic device (e.g., an electronic device 101) for capturing operations corresponding to subsequent user inputs, according to an embodiment.

Referring to FIG. 6, in an operation 601, the electronic device 101 may receive a first user input for capturing. For example, the first user input for capturing the first image may include a touch input of a shutter button on a camera UI. For another example, the first user input for capturing the first image may include a control signal received from a peripheral device (e.g., a stylus pen). The control signal may indicate a capture in the electronic device 101. For example, transmission of the control signal may be triggered in response to a button input of the peripheral device.

In an operation 603, while a first capturing operation corresponding to the first user input is performed, the electronic device 101 may store information regarding a second user input based on receiving the second user input for capturing. While the first capturing operation corresponding to the first user input is performed, the electronic device 101 may receive the second user input for image capture. For example, the electronic device 101 may receive the second user input for the capture before obtaining an image corresponding to the first capturing operation. In case that the second user input is received before completion of the first capturing operation, the electronic device 101 may store information regarding the second user input. According to an embodiment, the electronic device 101 may have a separate storage space storing a user input, such as a shutter input, for capturing. For example, the electronic device 101 may set a shutter queue in memory (e.g., memory 130 or memory 250). The electronic device 101 may store information regarding the second user input in the shutter queue. The electronic device 101 may store the second user input obtained from an application layer (e.g., the UI 310) in the memory. For example, the electronic device 101 may use a storage space that stores information regarding the second user input in the application layer, instead of using a queue that stores a frame in a system layer (e.g., a camera system 320).

In an operation 605, the electronic device 101 may identify the completion of the first capturing operation. The electronic device 101 may identify the completion of the first capturing operation by obtaining an image processed in response to the first user input. For example, the electronic device 101 may identify the completion of the first capturing operation by obtaining a capture completion event from a camera system (e.g., the camera system 320). When the first capturing operation is completed, the electronic device 101 may obtain the processed image in the application layer.

In an operation 607, the electronic device 101 may identify that a time difference between the second user input and the completion of the first capturing operation is less than or equal to a threshold. The electronic device 101 may identify a reception time point of the second user input. The electronic device 101 may identify a completion time point of the first capturing operation. The electronic device 101 may identify whether the second user input has been received, before a certain interval from the completion time point of the first capturing operation. For example, the electronic device 101 may calculate a difference between the completion time point of the first capturing operation and a reception time point of the second user input. The electronic device 101 may identify whether the difference between the completion time point of the first capturing operation and the reception time point of the second user input is less than or equal to the threshold. The threshold may identify whether the stored user input is valid.

In case that the first capturing operation is completed after a certain period of time has passed, after the second user input is stored, not only will a subsequent capturing operation be overall delayed, but a user may feel a reduction in shot-to-shot performance. Due to the difference between a desired time point through the second user input and a time point (e.g., immediately after the completion time point of the first capturing operation) at which the actual capture is initiated, the user may feel disconnected.

According to an embodiment, the electronic device 101 may set a threshold (or a threshold range) based on a completion time point of a capturing operation. For example, the threshold may be determined by various methods. According to an embodiment, the threshold may be determined as a fixed value (e.g., approximately 100 ms). As an example, the fixed value may be determined by a user setting. According to an embodiment, the threshold may be determined based on a type of camera used for capturing and/or image processing performance. For example, the higher quality of an image obtained through the camera, the longer the processing time may be. In an embodiment, as an image processing time corresponding to one capture is longer, the threshold may be set to be longer. According to an embodiment, the threshold may be determined based on a preview state. The preview state may mean object information and background information identified in a preview step before capture. The electronic device 101 may obtain the object information or the background information in an image to be captured through frames obtained before capture. The electronic device 101 may calculate a threshold corresponding to the image processing time based on the preview state. The threshold may dependent on an object and a background recognized in the preview state.

In an operation 609, in case that a difference between the completion time point of the first capturing operation and the reception time point of the second user input is less than or equal to the threshold, the electronic device 101 may perform a second capturing operation corresponding to the second user input.

Although two capturing operations are described in FIG. 6, embodiments of the present disclosure are not limited thereto. As described in FIG. 4B, even in capturing operations more than two times (e.g., four), a subsequent capturing operation utilizing a storage space for a shutter input may be used, according to embodiments of the present disclosure.

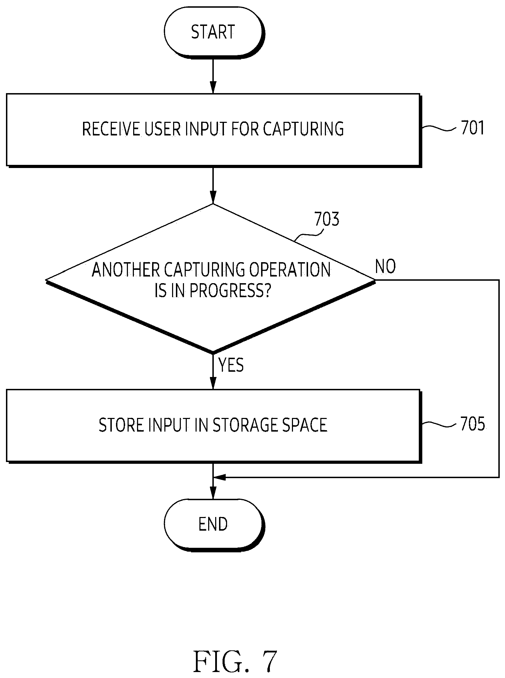

FIG. 7 illustrates an operation flow of an electronic device (e.g., an electronic device 101) for storing a user input for capturing, according to an embodiment.

Referring to FIG. 7, in an operation 701, the electronic device 101 may receive a user input for capturing. For example, the user input for the capturing may include a touch input of a shutter button on a camera UI. For another example, the user input for the capturing may include a control signal received from a peripheral device (e.g., a stylus pen). The control signal may indicate a capture in the electronic device 101. Transmission of the control signal may be triggered in response to a button input of the peripheral device.

In an operation 703, the electronic device 101 may identify whether another capturing operation is in progress. The electronic device 101 may identify whether the other capturing operation corresponding to a previous user input is in progress. In case that the user input received in the operation 701 is received, while the other capturing operation is in progress, the electronic device 101 may be required not to miss the user input. According to an embodiment, when the user input is received, the electronic device 101 may perform an operation 705, in case that the other capturing operation is in progress. In case that the other capturing operation is not in progress, the electronic device 101 may not perform separate storage.

In the operation 705, the electronic device 101 may store the user input in the storage space. According to an embodiment, the electronic device 101 may store the user input in the storage space, in order not to miss the user input received in the operation 701. According to an embodiment, the storage space may mean a storage area configured for a shutter input in memory (e.g., memory 130 or memory 250). As an example, the storage space may mean a storage area in the form of a container such as a queue, a list, or an array. The electronic device 101 may store the user input in the storage space to preserve the user input, until the other capturing operation of the operation 703 is completed.

Although not illustrated in FIG. 7, in the operation 703, in case that the other capturing operation is not in progress, the electronic device 101 may immediately initiate a capturing operation corresponding to the received user input without a separate storage operation.

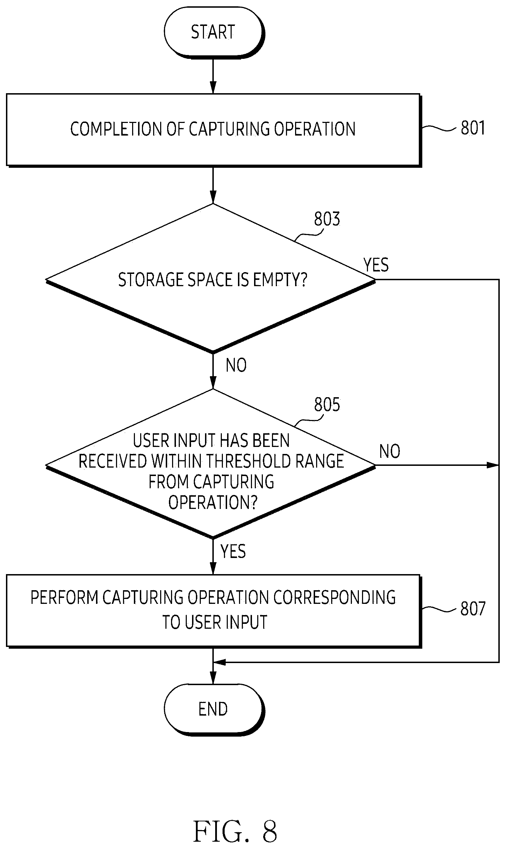

FIG. 8 illustrates an operation flow of an electronic device (e.g., an electronic device 101) after completion of a capturing operation, according to an embodiment.

Referring to FIG. 8, in an operation 801, the electronic device 101 may identify completion of a capturing operation. The operation 342 to the operation 352 of FIG. 3 may be referenced for a series of operations for a capturing operation. For example, the electronic device 101 may identify the completion of the capturing operation by obtaining a processed image corresponding to a capture completion event from a camera system.

In an operation 803, the electronic device 101 may identify whether a storage space is empty. The storage space may mean an area for a shutter queue for storing a user input (e.g., a shutter input) for capturing until the capturing operation is completed. In case that the capturing operation is completed, the electronic device 101 may monitor the storage space to identify whether a capturing operation by another user input is waiting. In case of identifying that the storage space is empty, the electronic device 101 may terminate the capturing operation. Although not illustrated in FIG. 8, in case that a user input for capturing is received after the completion of the capturing operation, the electronic device 101 may perform a capturing operation corresponding to the user input. In case of identifying that the storage space is not empty, the electronic device 101 may perform an operation 805.

In the operation 805, the electronic device 101 may identify whether a user input has been received within a threshold range from the completion of the capturing operation. The electronic device 101 may identify the user input. The user input may be a user input subsequent to the user input of the capturing operation of the operation 801. According to an embodiment, the electronic device 101 may identify a user input stored in the storage space for a capture input (or a shutter input). According to an embodiment, the electronic device 101 may identify a time point at which the user input is received. According to an embodiment, the electronic device 101 may identify a time point at which the capturing operation is completed. According to an embodiment, the electronic device 101 may identify whether the user input has been received within the threshold range, which precedes the completion time point of the capturing operation.

According to an embodiment, the electronic device 101 may identify whether the stored user input is valid. The electronic device 101 may identify that the user input is valid, in case that a reception time point of the user input is within the threshold range, for example, in case that a difference between the reception time point of the user input and the completion time point of the capturing operation is less than a threshold (e.g., a length of the threshold range). However, in case that the reception time point of the user input is not within the threshold range, the electronic device 101 may identify that the user input is invalid. In case that a user input is received within the threshold range from the completion of the capturing operation, the electronic device 101 may perform an operation 807. For example, in case that the user input is valid, the electronic device 101 may perform the operation 807. However, in case that the user input is not received within the threshold range from the completion of the capturing operation, the electronic device 101 may terminate the operation without an additional capturing operation. For example, in case that the user input is invalid, the electronic device 101 may terminate the operation. Although not illustrated in FIG. 8, the electronic device 101 may ignore an invalid user input and remove the user input from the storage space.

In the operation 807, the electronic device 101 may perform a capturing operation corresponding to a user input. Upon the completion of the capturing operation in the operation 801 corresponding to the previous user input, the electronic device 101 may perform a capturing operation corresponding to a subsequent user input. The operation 342 to the operation 352 of FIG. 3 may be referred, for a series of operations of the capturing operation corresponding to the user input.

According to an embodiment, the electronic device 101 may store a user input for capturing in a storage space 280 such as a shutter queue, and then initiate a capturing operation corresponding to the stored user input after the previous capturing operation is completed, so that capture of an instantaneous timing may not be missed. For example, in order to ensure that the user does not feel perceived delay, the electronic device 101 may only select the user input that precedes within the threshold range from the completion time point of the previous capturing operation. The electronic device 101 may initiate a capturing operation corresponding to the selected user input. Accordingly, subsequent capture is possible during panoramic capture or night capture, and the electronic device 101 may obtain an image of higher quality than a burst shot through subsequent captures of high quality/AF. In addition, a capturing operation using the shutter queue of the electronic device 101 may provide high shot-to-shot performance in conjunction with a zero shutter lag.

High pixels (e.g., approximately 200 million pixels) require a large amount of memory to store an image. Storing subsequent images may cause a burden on the memory . For example, in case that a valid user input is stored in a storage space, in response to the completion of the capturing operation, the electronic device 101 may perform a next capturing operation corresponding to the valid user input. However, in case that the next capturing operation is performed without an identification operation for available memory, the memory may be insufficient. The available memory means memory that may be used for a subsequent capturing operation using the shutter queue. The electronic device 101 may further determine a condition related to the available memory in addition to simply determining a condition (e.g., the operation 803 and the operation 805 of FIG. 8) regarding whether the valid user input is stored in a storage space (e.g., the shutter queue) to reduce problem caused by memory.

According to an embodiment, the electronic device 101 may further include an operation of checking the available memory for a subsequent capturing operation using the shutter queue. For example, in case that a size of the available memory is greater than or equal to the threshold, the electronic device 101 may identify that memory (i.e., the available memory) for the subsequent capturing operation using the shutter queue is secured. In addition, for example, in case that the electronic device 101 has RAM (e.g., 12GB of RAM) that may provide available memory of a sufficient size, the electronic device 101 may identify that the memory for the subsequent capturing operation using the shutter queue is secured. In case that the available memory is secured and the valid user input is stored in the shutter queue, the electronic device 101 may perform a capturing operation related to the user input, that is, a next capturing operation.

According to an embodiment, after the available memory is identified, the electronic device 101 may identify whether the storage space (e.g., the shutter queue) is empty (e.g., the operation 803). However, the order of the operation of identifying the available memory and the operation of identifying whether the storage space (e.g., the shutter queue) is empty is not limited thereto. The operation of identifying the available memory may be performed overlappingly or later with the operation of identifying whether the storage space (e.g., the shutter queue) is empty. According to an embodiment, after identifying whether the storage space (e.g., the shutter queue) is empty (e.g., the operation 803), the electronic device 101 may identify whether there is the available memory in the electronic device 101. In addition, according to an embodiment, after identifying whether the valid user input is stored in the storage space (e.g., the shutter queue) (e.g., the operation 805), the electronic device 101 may identify whether there is available memory in the electronic device 101.

In embodiments, an electronic device 101 may comprise a camera 180, at least one processor 120, and memory 130 or 250 having a storage space 280. The at least one processor 120 may be configured to receive a first user input for capturing an image. The at least one processor 120 may, based on receiving a second user input for capturing an image while a first capturing operation corresponding to the first user input is performed through the camera 180, store information regarding the second user input in the storage space 280. The at least one processor 120 may be configured to, based on identifying completion of the first capturing operation, identify whether a time difference between the second user input and the completion of the first capturing operation is less than or equal to a threshold. The at least one processor 120 may be configured to, if the time difference is less than or equal to the threshold, perform a second capturing operation corresponding to the second user input.

According to an embodiment, the completion of the first capturing operation may be identified based on obtaining a processed image from a system layer in accordance with the first user input.

According to an embodiment, the first capturing operation may include an event triggering auto exposure (AE) and an auto focusing (AF), an event requesting a capture, a shutter callback event, an AF lock event, and an event obtaining the processed image.

According to an embodiment, the at least one processor 120 may be configured to, based on identifying the completion of the first capturing operation, identify whether the storage space 280 is empty. The at least one processor 120 may be configured to, if the storage space 280 is not empty, remove information regarding the second user input in the storage space 280 in conjunction with performing the second capturing operation corresponding to the second user input.

According to an embodiment, the at least one processor 120 may be further configured to, if the time difference between the second user input and the completion of the first capturing operation is greater than the threshold, remove the information regarding the second user input in the storage space 280 without performing the second capturing operation corresponding to the second user input.

According to an embodiment, the first capturing operation may be used to obtain an image processed by a post processing picture (PPP) method. The second capturing operation may be used to obtain an image processed by a PPP method.

According to an embodiment, to perform the second capturing operation, the at least one processor 120 may be configured to identify that the time difference is less than or equal to the threshold. The at least one processor 120 may be configured to provide a capture event corresponding to the second user input to a system layer for the camera 180 to perform the second capturing operation.

According to an embodiment, the second capturing operation may include playing a shutter sound corresponding to the second user input. The shutter sound may be played after a time point of the completion of the first capturing operation.

According to an embodiment, the at least one processor 120 may be configured to receive a third user input for capturing an image. The at least one processor 120 may be configured to, if the third user input is received while the second capturing operation is performed, store information regarding the third user input in the storage space 280. The at least one processor 120 may be configured to, if the third user input is received while the second capturing operation is not performed, perform a third capturing operation corresponding to the third user input.

According to an embodiment, the storage space 280 may include a queue, an array, or a list for storing information related to a user input for capturing.

In embodiments, a method performed by an electronic device may comprise receiving a first user input for capturing. The method may comprise, based on receiving a second user input for capturing an image while a first capturing operation corresponding to the first user input is performed, storing information regarding the second user input in a storage space 280. The operation may comprise, based on identifying completion of the first capturing operation, identifying whether a time difference between the second user input and the completion of the first capturing operation is less than or equal to a threshold. The operation may comprise, if the time difference is less than or equal to the threshold, performing a second capturing operation corresponding to the second user input.

According to an embodiment, the completion of the first capturing operation may be identified based on obtaining a processed image from a system layer in accordance with the first user input.

According to an embodiment, the first capturing operation may include an event triggering auto exposure (AE) and auto focusing (AF), an event requesting a capture, a shutter callback event, an AF lock event, and an event obtaining the processed image.

According to an embodiment, the method may comprise, based on identifying the completion of the first capturing operation, identifying whether the storage space 280 is empty. The method may comprise, if the storage space 280 is not empty, removing the information regarding the second user input in the storage space 280 in conjunction with performing the second capturing operation corresponding to the second user input.

According to an embodiment, the method may comprise, if the time difference between the second user input and completion of the first capturing operation is greater than the threshold, removing the information regarding the second user input in the storage space 280 without performing the second capturing operation corresponding to the second user input.

According to an embodiment, the first capturing operation may be used to obtain an image processed by a post processing picture (PPP) method. The second capturing operation may be used to obtain an image processed by a PPP method.

According to an embodiment, performing the second capturing operation may comprise identifying that the time difference is less than or equal to the threshold. Performing the second capturing operation may comprise providing a capture event corresponding to the second user input to a system layer for the camera 180.

According to an embodiment, the second capturing operation may include playing a shutter sound corresponding to the second user input. The shutter sound may be played after a time point of the completion of the first capturing operation.

According to an embodiment, the method may comprise receiving a third user input for capturing an image. The method may comprise, if the third user input is received while the second capturing operation is performed, storing information regarding the third user input in the storage space 280. The method may comprise, if the third user input is received while the second capturing operation is not performed, performing a third capturing operation corresponding to the third user input.

According to an embodiment, the storage space 280 may include a queue, an array, or a list for storing information related to a user input for capturing.

In embodiments, a non-transitory computer-readable medium may comprise memory configured to store instructions. The instructions, when executed by a processor, may cause the electronic device to receive a first user input for capturing, based on receiving a second user input for capturing an image while a first capturing operation corresponding to the first user input is performed, to store information regarding the second user input in a storage space 280, based on identifying completion of the first capturing operation, to identify whether a time difference between the second user input and the completion of the first capturing operation is less than or equal to a threshold, and if the time difference is less than or equal to the threshold, to perform a second capturing operation corresponding to the second user input.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
a camera (180);
at least one processor (120); and
memory (130, 250) having a storage space (280),
wherein the at least one processor (120) is configured to:
receive a first user input for capturing an image;
based on receiving a second user input for capturing an image while a first capturing operation corresponding to the first user input is performed through the camera (180), store information regarding the second user input in the storage space (280);
based on identifying completion of the first capturing operation, identify whether a time difference between the second user input and the completion of the first capturing operation is less than or equal to a threshold; and
if the time difference is less than or equal to the threshold, perform a second capturing operation corresponding to the second user input.

2. The electronic device (101) of claim 1,
wherein the completion of the first capturing operation is identified based on obtaining a processed image from a system layer in accordance with the first user input.

3. The electronic device (101) of claims 1 to 2,
wherein the first capturing operation includes an event triggering auto exposure (AE) and auto focusing (AF), an event requesting a capture, a shutter callback event, an AF lock event, and an event obtaining the processed image.

4. The electronic device (101) of claims 1 to 3,
wherein the at least one processor (120) is further configured to:
based on identifying the completion of the first capturing operation, identify whether the storage space (280) is empty; and
if the storage space (280) is not empty, remove information regarding the second user input in the storage space (280) in conjunction with performing the second capturing operation corresponding to the second user input.

5. The electronic device (101) of claims 1 to 4,
wherein the at least one processor (120) is further configured to,
if the time difference between the second user input and the completion of the first capturing operation is greater than the threshold, remove the information regarding the second user input in the storage space (280) without performing the second capturing operation corresponding to the second user input.

6. The electronic device (101) of claims 1 to 5,
wherein the first capturing operation is used to obtain an image processed by a post processing picture (PPP) method, and
wherein the second capturing operation is used to obtain an image processed by a PPP method.

7. The electronic device (101) of claims 1 to 6,
wherein, to perform the second capturing operation, the at least one processor (120) is configured to:
identify that the time difference is less than or equal to the threshold; and
provide a capture event corresponding to the second user input to a system layer for the camera (180).

8. The electronic device (101) of claims 1 to 7,
wherein the second capturing operation includes playing a shutter sound corresponding to the second user input, and
wherein the shutter sound is played after a time point of the completion of the first capturing operation.

9. The electronic device (101) of claims 1 to 8,
wherein the at least one processor (120) is further configured to:
receive a third user input for capturing an image;
if the third user input is received while the second capturing operation is performed, store information regarding the third user input in the storage space (280); and
if the third user input is received while the second capturing operation is not performed, perform a third capturing operation corresponding to the third user input.

10. The electronic device (101) of claims 1 to 9,
wherein the storage space (280) includes a queue, an array, or a list for storing information related to user inputs for capturing.

11. A method performed by an electronic device (101), the method comprising:
receiving a first user input for capturing;
based on receiving a second user input for capturing an image while a first capturing operation corresponding to the first user input is performed, storing information regarding the second user input in a storage space (280);
based on identifying completion of the first capturing operation, identifying whether a time difference between the second user input and the completion of the first capturing operation is less than or equal to a threshold; and
if the time difference is less than or equal to the threshold, performing a second capturing operation corresponding to the second user input.

12. The method of claim 11,
wherein the completion of the first capturing operation is identified based on obtaining a processed image from a system layer in accordance with the first user input.

13. The method of claims 11 to 12,
wherein the first capturing operation includes an event triggering auto exposure (AE) and auto focusing (AF), an event requesting a capture, a shutter callback event, an AF lock event, and an event obtaining the processed image.

14. The method of claims 11 to 13, further comprising:
based on identifying the completion of the first capturing operation, identifying whether the storage space (280) is empty; and
if the storage space (280) is not empty, removing the information regarding the second user input in the storage space (280) in conjunction with performing the second capturing operation corresponding to the second user input.

15. The method of claims 11 to 14, further comprising:
if the time difference between the second user input and completion of the first capturing operation is greater than the threshold, removing the information regarding the second user input in the storage space (280) without performing the second capturing operation corresponding to the second user input.
